# EUROPÄISCHE PATENTSCHRIFT

(11) **EP 2 183 072 B1**
(45) Veröffentlichungstag und Bekanntmachung des Hinweises auf die Patenterteilung: **20.09.2017**
(21) Anmeldenummer: 08760636.4
(22) Anmeldetag: 06.06.2008
(51) Int. Cl.: B23D 49/16, B23D 51/02

(54) **HANDWERKZEUGMASCHINE**
HANDHELD POWER TOOL
MACHINE-OUTIL À MAIN

(30) Priorität: 25.07.2007 DE 102007034529
(43) Veröffentlichungstag der Anmeldung: 12.05.2010
(73) Patentinhaber: Robert Bosch GmbH, 70442 Stuttgart (DE)
(72) Erfinder: FUCHS, Rudolf, 73765 Neuhausen (DE)
(86) Internationale Anmeldenummer: PCT/EP2008/057063
(87) Internationale Veröffentlichungsnummer: WO 2009/013056

(56) Entgegenhaltungen:
- EP-A- 0 163 186
- EP-A- 0 521 263
- EP-A- 0 970 771
- EP-A- 0 990 492
- EP-A- 1 586 399
- DE-A1- 19 926 387
- US-A- 3 087 519
- US-A- 4 730 397

## Beschreibung

### Stand der Technik

Die Erfindung geht aus von einer Handwerkzeugmaschine mit einem Schneidwerkzeug, nach dem Oberbegriff des Anspruchs 1. Eine derartige Handwerkzeugmaschine ist aus der EP 0 163 186 A2 bekannt. Weiterer Stand der Technik ist aus den Druckschriften EP 1 586 399 A und US 3 087 519 A bekannt.

Bekannt ist ferner eine Hubsägemaschine, die in einem Maschinengehäuse einen Elektromotor und ein Getriebe sowie eine zu einer auf- und abwärtsgerichteten Hubbewegung antreibbare Hubstange aufnimmt, an deren freiem Ende ein Spannkopf zum Einspannen eines Hubsägeblatts angeordnet ist. Das Maschinengehäuse trägt an seiner Unterseite einen Gleitkopf, der auf einem an einer Fußplatte befestigten Haltebügel aufgesetzt ist. Die Fußplatte, die eine Ausnehmung zum Durchtritt des Hubsägeblatts aufweist, dient zum Aufsetzen der Hubsägemaschine auf die Oberfläche eines zu sägenden Werkstücks. Der U-förmige Haltebügel besteht aus zwei voneinander beabstandeten, parallelen Bügelschenkeln, die endseitig über einen bogenförmigen Quersteg miteinander verbunden sind. An den freien Enden der Bügelschenkel sind Laschen rechtwinklig abgebogen, über die der Haltebügel auf der Oberfläche der Fußplatte befestigt ist. Die Höhe des Haltebügels über der Fußplatte ist dabei größer als der Radius des bogenförmigen Querstegs. Der Gleitkopf des Maschinengehäuses ist auf dem bogenförmigen Querteil des Haltebügels in dessen Umfangsrichtung verschiebbar festgesetzt. Eine Einstellvorrichtung ermöglicht das Verschieben des Maschinengehäuses mit Gleitkopf längs des bogenförmigen Querteils des Haltebügels und ein Festsetzen in einer gewünschten Winkelposition, so dass mit dem dadurch gegen die Fußplatte unter einem spitzen Winkel ausgerichteten Hubsägeblatt ein schräg zur Werkstückoberfläche verlaufender Sägeschnitt ausgeführt werden kann. Die Einstellvorrichtung weist eine aus der Fußplatte ausgeschnittene und rechtwinklig aus der Fußplatte nach oben ausgebogene Verriegelungsplatte und einen mit der Verriegelungsplatte zusammenwirkenden Schieberriegel auf. Die Verriegelungsplatte ist auf der von der Hubstange abgekehrten Rückseite des Gleitkopfes des Maschinengehäuses hochgebogen, reicht bis an die Unterseite des Maschinengehäuses und weist einen oberen, bogenförmigen Plattenrand auf, in den längs des Bogens voneinander beabstandet angeordnete Rastnuten eingearbeitet sind. Jeder Rastnut ist eine Winkelangabe zugeordnet. Der bogenförmige Plattenrand der Verriegelungsplatte verläuft konzentrisch zu dem bogenförmigen Quersteg des Haltebügels. Der Schieberriegel ist an der Unterseite des Maschinengehäuses verschieblich angeordnet und von einer Rückstellfeder so belastet, dass das freie Ende des Schieberriegels in eine der Rastnuten einzufallen vermag. Am anderen Ende des Schieberriegels ist eine Griffplatte von diesem abgewinkelt. Wird der Schieberriegel manuell gegen die Rückstellkraft der Rückstellfeder verschoben, so taucht er aus einer Rastnut aus und das Maschinengehäuse kann gegenüber der Fußplatte längs des bogenförmigen Querstegs geschwenkt werden, bis eine gewünschte Schrägstellung des Hubsägeblatts erreicht wird. Fällt der Schieberriegel nach Loslassen des Griffteils in die entsprechende Rastnut ein, so sind Fußplatte und Maschinegehäuse wieder starr miteinander verbunden.

Aufgrund der beschriebenen konstruktiven Gestaltung des Haltebügels tritt beim Schrägstellen des Maschinengehäuses gegenüber der Fußplatte ein sog. Schnittlinienversatz auf, d. h. das Hubsägeblatt tritt bei Winkelverstellung nicht mehr mittig durch die Ausnehmung in der Fußplatte hindurch, wie dies bei rechtwinklig zur Fußplatte ausgerichtetem Maschinengehäuse der Fall ist, sondern seitlich versetzt. Dies hat zur Folge, dass der von der Hubsäge erzeugte Schnitt gegenüber der Längsachse des Maschinengehäuses seitlich versetzt ist, was beim Aufspannen eines Führungslineals auf das Werkstück zur geradlinigen Führung der Handwerkzeugmaschine über die Fußplatte berücksichtigt werden muss.

### Offenbarung der Erfindung

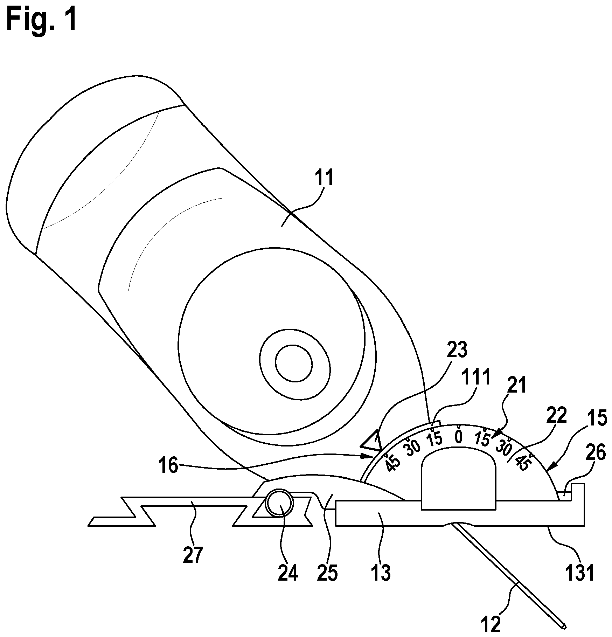

Die Handwerkzeugmaschine mit den Merkmalen des Anspruchs 1 hat den Vorteil, wie bei den im oben zitierten Stand der Technik offenbarten Handwerkzeugmaschinen, dass durch die volle Halbkreisform des Haltebügels mit in der Fußplatte liegendem Mittelpunkt des Halbkreises die Höhe des Haltebügels gleich dem Radius des bogenförmigen Bügelteils ist, auf dem entlang das Maschinengehäuse zur Einstellung von Schrägschnitten verschoben werden muss. Damit taucht das Hubsägeblatt unabhängig von der Winkelstellung des Maschinengehäuses gegenüber der Fußplatte immer mittig durch die Ausnehmung in der Fußplatte hindurch, und es tritt kein Schnittlinienversatz auf. Erfindungsgemäß sind an der Fußplatte 13 an einer ihrer Längsseiten zwei voneinander beabstandete Zapfen 24 angeordnet. Die Zapfen 24 sind dabei an zwei Klemmstücken 25 angeformt. Jeweils ein Klemmstück 25 ist in eine in der Fußplatte 13 eingeformte Kammer 26 eingeclipst. In der Fußplatte 13 sind insgesamt vier Kammern 26 vorhanden, so dass die beiden Klemmstücke 25 wahlweise in die hintereinander rechts oder links angeordneten Kammern 26 eingeclipst werden können und die Zapfen 24 somit von der rechten oder linken Längsseite der Fußplatte 13 abstehen. Die Zapfen 24 dienen zum Ansetzen einer Führungsschiene 27 (Fig. 1).Für eine geradlinige Schnittführung wird die über die Zapfen 24 an die Fußplatte 13 angeklemmte Führungsschiene 27 auf ein auf der Werkstückoberfläche aufgespanntes Führungslineal in Schwalbenschwanzausführung aufgesetzt und beim Sägen an dem Führungslineal entlanggeschoben.

Auf dem Haltebügel steht eine große Fläche zur Verfügung, auf der der Gleitkopf am Maschinengehäuse aufgenommen wird, so dass eine stabile Verbindung zwischen Fußplatte und Maschinengehäuse entsteht. Andererseits ermöglicht der große Umfang des Haltebügels die Anbringung einer gut sicht- und ablesbaren Winkelskala, so dass der Bedienkomfort bei der Einstellung von Schrägschnitten wesentlich verbessert wird.

Gemäß einer vorteilhaften Ausführungsform der Erfindung ist an der von der Ausnehmung in der Fußplatte abgekehrten hinteren Stirnseite des Haltebügels eine den von Haltebügel und Fußplatte begrenzten, lichten Querschnitt zumindest teilweise abdeckende Blende am Haltebügel angeordnet, auf der die Winkelskala angeordnet ist. Die Blende ist dabei vorzugsweise in Schnittrichtung um einen spitzen Winkel geneigt. Infolge der großen Umfangsfläche des Haltebügels ist auch auf der Blende eine große Fläche für die Unterbringung der Winkelskala vorhanden, und durch die nach vorn in Schnittrichtung geneigte Ausbildung der Blende ist die Winkelskala von der Rückseite der Handwerkzeugmaschine her sehr gut ablesbar.

### Kurze Beschreibung der Zeichnungen

Die Erfindung ist anhand eines in den Zeichnungen dargestellten Ausführungsbeispiels in der nachfolgenden Beschreibung näher erläutert. Es zeigen:
- Fig. 1: eine Rückansicht einer Hubsägemaschine mit Maschinengehäuse, Fußplatte und einer an die Fußplatte angeklemmten Führungsschiene,
- Fig. 2: eine perspektivische Draufsicht der Fußplatte der Hubsägemaschine in Fig. 1,
- Fig. 3: eine schematisierte Darstellung eines Querschnitts der Fußplatte längs der Schnittlinie III - III in Fig. 2 mit ausschnittweise angedeutetem Maschinengehäuse.

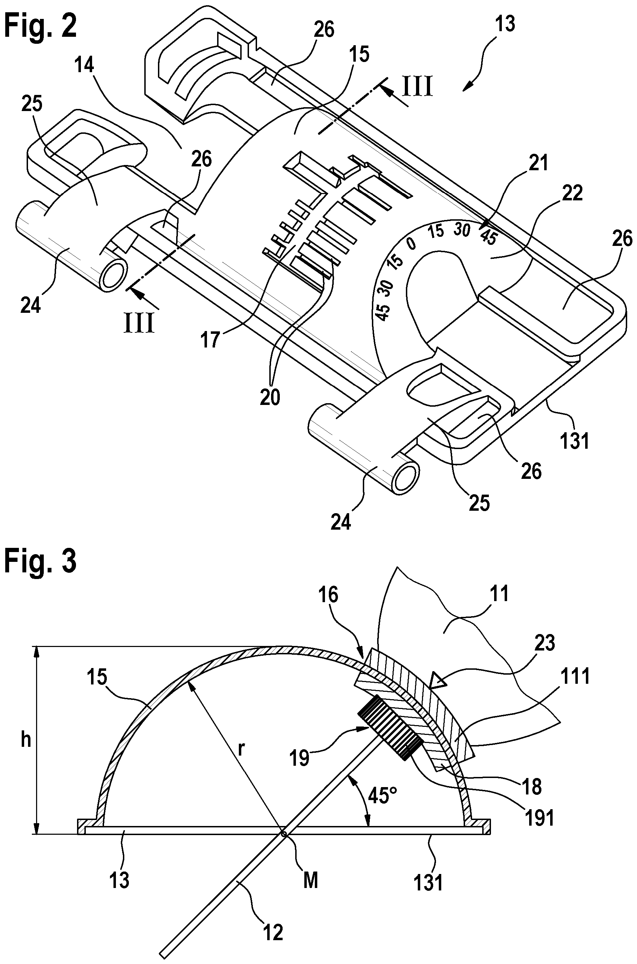

Die in Fig. 1 dargestellte Hubsägemaschine als Ausführungsbeispiel für eine Handwerkzeugmaschine mit einem Schneidwerkzeug weist ein Maschinengehäuse 11 auf, in dem ein hier nicht dargestellter Elektromotor und ein Getriebe sowie eine vom Elektromotor über das Getriebe in eine aufwärts- und abwärtsgerichtete Hubbewegung antreibbare Hubstange aufgenommen sind. Am freien Ende der Hubstange ist ein Spannkopf angeordnet, in dem ein als Hubsägeblatt 12 ausgebildetes Schneidwerkzeug wechselbar einspannbar ist. Das Maschinengehäuse 11 ist mit einer Fußplatte 13 verbunden, die eine Ausnehmung 14 (Fig. 2) zum Durchtauchen des Hubsägeblatts 12 aufweist und zum Aufsetzen der Hubsägemaschine auf die Oberfläche eines Werkstücks dient.

Die in Fig. 2 in perspektivischer Draufsicht und in Fig. 3 in einem schematischen Querschnitt dargestellte Fußplatte 13 ist ein Spritzgußteil, z. B. Aluminium-Druckgußteil, an dem einstückig ein Haltebügel 15 angeformt ist. Wie aus Fig. 3 hervorgeht hat der Haltebügel 15 die Form eines Halbkreises, dessen Mittelpunkt M auf der zur Auflage auf der Werkstückoberfläche bestimmten Unterseite 131 der Fußplatte 13 liegt. Dadurch ist die Höhe h des Haltebügels 15 von der Unterseite 131 der Fußplatte 13 gleich dem Radius r des Haltebügels 15. Der Radius r des Haltebügels 15 ist dabei wenig kleiner als die halbe Breite der Fußplatte 13 bemessen, und die axiale Länge des Haltebügels 15, in Schnitt- oder Sägerichtung der Hubsägemaschine gesehen, liegt etwa in der Größenordnung von einem Drittel der axialen Länge der Fußplatte 13. Dadurch weist der Haltebügel 15 eine große Oberfläche zur Aufnahme des Maschinengehäuses 11 auf.

Das Maschinengehäuse 11 ist mit einem an seiner Unterseite einstückig angeformten Gleitkopf 111 auf die Oberseite des Haltebügels 15 aufgesetzt und am Haltebügel 15 in dessen Umfangsrichtung verschiebbar gehalten. Eine Winkeleinstellvorrichtung 16 ermöglicht dabei, dass das Maschinengehäuse 11 längs des kreisbogenförmigen Umfangs des Haltebügels 15 verschiebbar und in definierten Winkelpositionen so festsetzbar ist, dass eine feste Verbindung zwischen Maschinengehäuse 11 und Fußplatte 13 besteht. Hierzu ist im Haltebügel 15 ein in Umfangsrichtung sich erstreckender Schlitz 17 (Fig. 2) vorhanden und an der Innenseite des Haltebügels 15 ein Spannstück 18 (Fig. 3) angeordnet. Eine Spannschraube 19 durchdringt das Spannstück 18 und den Schlitz 17 und ist mit ihrem Schraubenschaft in einer Gewindebohrung im Gleitkopf 111 eingeschraubt. Die Spannschraube 19 hat einen als Rändelrad 191 ausgebildeten Schraubenkopf. Wird die Spannschraube 19 gelöst, so lässt sich das Maschinengehäuse 11 entlang des Haltebügels 15 verschieben, wird die Spannschraube 19 angezogen, so ist das Maschinengehäuse 11 auf dem Haltebügel 15 arretiert. Entlang des Schlitzes 17 sind im Haltebügel 15 Rastnuten 20 (Fig. 2) eingearbeitet. Am Gleitkopf 111 ist eine hier nicht dargestellte Rastnase vorhanden, die mit den Rastnuten 20 zusammenwirkt. Die Rastnuten 20 sind so angeordnet, dass jede Rastnut 20 eine Winkelstellung des Maschinengehäuses 11 an der Fußplatte 13 festlegt, die einem bestimmten Winkel gegenüber der Normalen zur Fußplatte 13 entspricht. Eine den Rastnuten 20 zugeordnete Winkelskala 21 am Haltebügel 15 gibt den jeweiligen Winkel, z.B. 0°, 15°, 30°, 45°, an.

Für eine gut ablesbare Anbringung der Winkelskala 21 ist an der in Schnittrichtung hinteren Stirnseite des Haltebügels 15 eine Blende 22 angeordnet, die den von Haltebügel 15 und Fußplatte 13 begrenzten, lichten Querschnitt zumindest teilweise abdeckt. Die Blende 22 ist dabei unter einem spitzen Winkel in Schnittrichtung geneigt angeordnet. Auf die Blende 22 ist die Winkelskala 21 mit ihren Skalenwerten aufgebracht. Eine am Maschinengehäuse 11 oder an dessen Gleitkopf 111 vorhandene Markierung 23 ist so angeordnet, dass bei Ausrichtung der Markierung 23 auf einen der Skalenwerte der Winkelskala 21 die am Gleitkopf 111 angeordnete Rastnase in diejenige Rastnut 20 im Haltebügel 15 einrastet, die dem durch die Markierung 23 angezeigten Skalenwert zugeordnet ist.

In der normalen Gebrauchsstellung der Hubsägemaschine ist die Markierung 23 auf den Skalenwert "0°" eingestellt. Die Gehäuseachse und damit die Achse der Hubsägemaschine befinden sich in einer Ebene, in der auch die mittig auf der Fußplatte 13 errichtete Normale liegt, und das Hubsägeblatt 12 tritt mittig durch die Ausnehmung 14 hindurch. In Fig.1 und 2 ist eine Schnittwinkeleinstellung von +45° bzw. -45° dargestellt. Wie in beiden Figuren zu erkennen ist, tritt auch bei der maximalen Schnittwinkeleinstellung, also bei Verschwenkung des Maschinengehäuses 11 gegenüber der Fußplatte 13 nach links oder rechts, das Hubsägeblatt 12 immer mittig durch die Ausnehmung 14 in der Fußplatte 13 hindurch, so dass durch das Verschwenken des Maschinengehäuses 11 am Haltebügel 15 kein Schnittlinienversatz entsteht. Dies gilt in gleicher Weise auch für die anderen Winkeleinstellungen des Maschinengehäuses 11 am Haltebügel 15.

## Patentansprüche

1. Handwerkzeugmaschine mit einem Schneidwerkzeug, insbesondere Hubsägemaschine, mit einer Fußplatte (13) zum Aufsetzen auf die Oberfläche eines zu schneidenden Werkstücks, die einen zumindest teilweise bogenförmigen Haltebügel (15) und eine Ausnehmung (14) zum Durchtauchen des Schneidwerkzeugs aufweist, mit einem auf dem Haltebügel (15) in dessen Umfangsrichtung verschiebbaren und auf diesem festspannbaren Maschinengehäuse (11), in dem das Schneidwerkzeug gehalten ist, und mit einer Winkeleinstellvorrichtung (16) für Schrägschnitte des Schneidwerkzeugs durch Bewegen des Maschinengehäuses (11) auf dem Haltebügel (15), die eine entlang des Bogens des Haltebügels (15) angeordnete Winkelskala (21) und eine am Maschinengehäuse (11) angeordnete Markierung (23) aufweist, wobei der Haltebügel (15) als Halbkreis ausgeführt ist, dessen Mittelpunkt (M) in der Fußplatte (13), vorzugsweise auf der zur Auflage auf der Werkstückoberfläche bestimmten Unterseite (131) der Fußplatte (13), liegt, **dadurch gekennzeichnet, dass** an der Fußplatte (13) mindestens zwei an einer Längsseite der Fußplatte (13) vorstehende Zapfen (24) zum Ansetzen einer Führungsschiene (27) angeordnet sind.

2. Handwerkzeugmaschine nach Anspruch 1, **dadurch gekennzeichnet, dass** jeder Zapfen (24) an einem Klemmstück (25) angeformt ist, das in eine von vier auf der Fußplatte (13) paarweise in Längsrichtung der Fußplatte (13) voneinander beabstandet ausgebildeten Kammern (26) eingeclipst ist.

3. Handwerkzeugmaschine nach Anspruch 1 oder 2, **dadurch gekennzeichnet, dass** das Maschinengehäuse (11) mit einem eine bogenförmige Gleitfläche aufweisenden Gleitkopf (111) auf dem halbkreisförmigen Haltebügel (15) aufliegt, und dass der Haltebügel (15) einen in Umfangsrichtung sich zumindest über den Skalenbereich der Winkelskala (21) erstreckenden Schlitz (17) aufweist, durch den hindurch eine über ein Spannstück (18) sich an der Unterseite des Haltebügels (15) abstützende Spannschraube (19) in den Gleitkopf (111) einschraubbar ist.

4. Handwerkzeugmaschine nach Anspruch 3, **dadurch gekennzeichnet, dass** im Haltebügel (15) entlang des Schlitzes (17) Rastnuten (20) in Zuordnung zu den Skalenwerten der Winkelskala (21) und am Gleitkopf (111) eine Rastnase in Zuordnung zu der Markierung (23) angeordnet sind, die mit den Rastnuten (20) zusammenwirkt.

5. Handwerkzeugmaschine nach einem der Ansprüche 1 bis 4, **dadurch gekennzeichnet, dass** am Haltebügel (15) an der von der Ausnehmung (14) in der Fußplatte (13) abgekehrten, hinteren Stirnseite des Haltebügels (15) eine den von Haltebügel (15) und Fußplatte (13) begrenzten lichten Querschnitt zumindest teilweise abdeckende Blende (22) angeordnet ist und dass die Winkelskala (21) auf der Blende (22) angeordnet ist.

6. Handwerkzeugmaschine nach Anspruch 5, **dadurch gekennzeichnet, dass** die Blende (22) unter einem spitzen Winkel in Schnittrichtung geneigt angeordnet ist.

7. Handwerkzeugmaschine nach einem der Ansprüche 1 bis 6, **dadurch gekennzeichnet, dass** der Haltebügel (15) eine in Schnittrichtung gesehene, axiale Länge aufweist, die in der Größenordnung von einem Drittel der axialen Länge der Fußplatte (13) liegt.

8. Handwerkzeugmaschine nach einem der Ansprüche 1 bis 7, **dadurch gekennzeichnet, dass** die Fußplatte (13) als Spritzgussteil, z. B. Aluminium-Druckgußteil, mit einstückig angeformtem Haltebügel (15) ausgeführt ist.

## Claims

1. Portable power tool having a cutting tool, in particular reciprocating sawing machine, having a sole plate (13) for placing on the surface of a workpiece to be cut, said sole plate (13) having an at least partially arcuate retaining clip (15) and a cutout (14) for the cutting tool to plunge through, having a machine housing (11) which is displaceable on the retaining clip (15) in the circumferential direction thereof and is able to be clamped tightly thereto and in which the cutting tool is held, and having an angle setting device (16) for bevel cuts of the cutting tool by the machine housing (11) being moved on the retaining clip (15), said angle setting device (16) having an angle scale (21) arranged along the arc of the retaining clip (15) and a marking (23) arranged on the machine housing (11), wherein the retaining clip (15) is embodied in a semi-circular manner, the centre point (M) of which is located in the sole plate (13), preferably on the underside (131), intended for resting on the workpiece surface, of the sole plate (13), **characterized in that** at least two trunnions (24) for attaching a guide rail (27) which protrude from a longitudinal side of the sole plate (13) are arranged on the sole plate (13).

2. Portable power tool according to Claim 1, **characterized in that** each trunnion (24) is integrally formed on a clamping piece (25) which is clipped into one of four chambers (26) that are formed on the sole plate (13) in a manner spaced apart from one another in pairs in the longitudinal direction of the sole plate (13).

3. Portable power tool according to Claim 1 or 2, **characterized in that** the machine housing (11) bears on the semi-circular retaining clip (15) by way of a sliding head (111) having an arcuate sliding surface, and **in that** the retaining clip (15) has a slot (17) which extends in the circumferential direction at least over the scale region of the angle scale (21) and through which a clamping screw (19) that is supported on the underside of the retaining clip (15) via a clamping piece (18) is able to be screwed into the sliding head (111).

4. Portable power tool according to Claim 3, **characterized in that**, in the retaining clip (15), latching grooves (20) assigned to the scale values of the angle scale (21) are arranged along the slot (17) and a latching lug assigned to the marking (23) is arranged on the sliding head (111), said latching lug cooperating with the latching grooves (20).

5. Portable power tool according to one of Claims 1 to 4, **characterized in that** a cover plate (22) that at least partially covers the clear cross section bounded by the retaining clip (15) and sole plate (13) is arranged on the retaining clip (15) on the rear end face, facing away from the cutout (14) in the sole plate (13), of the retaining clip (15), and **in that** the angle scale (21) is arranged on the cover plate (22).

6. Portable power tool according to Claim 5, **characterized in that** the cover plate (22) is arranged in a manner inclined at an acute angle in the cutting direction.

7. Portable power tool according to one of Claims 1 to 6, **characterized in that** the retaining clip (15) has an axial length, as seen in the cutting direction, which is around a third of the axial length of the sole plate (13).

8. Portable power tool according to one of Claims 1 to 7, **characterized in that** the sole plate (13) is embodied as an injection-moulded part, for example an aluminium casting, having an integrally formed retaining clip (15).

## Revendications

1. Outil manuel motorisé doté d'un outil de coupe, en particulier scie sauteuse, présentant
une plaque de pied (13) destinée à être placée sur la surface d'une pièce à découper et qui présente un étrier de maintien (15) au moins en partie en forme d'arc de cercle et une découpe (14) permettant le passage de l'outil de coupe,
un boîtier de machine (11) dans lequel est repris l'outil de coupe, apte à coulisser dans la direction périphérique sur l'étrier de maintien (15) et à être serré sur ce dernier et
un ensemble (16) d'ajustement angulaire permettant de réaliser des découpes obliques avec l'outil de coupe par déplacement du boîtier de machine (11) sur l'étrier de maintien (15), l'ensemble d'ajustement angulaire présentant une échelle angulaire (21) disposée sur l'arc de cercle de l'étrier de maintien (15) et un repère (23) disposé sur le boîtier de machine (11),
l'étrier de maintien (15) étant réalisé sous la forme d'un demi-cercle dont le centre (M) est situé dans la plaque de pied (13), de préférence sur le côté inférieur (131) de la plaque de pied (13) défini par la pose sur la surface de la pièce,
**caractérisé en ce que**
au moins deux tourillons (24) en saillie, destinés à placer un rail de guidage (27), sont disposés sur un côté longitudinal de la plaque de pied (13).

2. Outil manuel motorisé selon la revendication 1, **caractérisé en ce que** chaque tourillon (24) est formé sur une pièce de serrage (25) encliquetée dans une parmi quatre pinces (26) formées deux à deux sur la plaque de pied (13) à distance mutuelle dans le sens de la longueur de la plaque de pied (13).

3. Outil manuel motorisé selon les revendications 1 ou 2, **caractérisé en ce que** le boîtier de machine (11) repose sur l'étrier de maintien (15) en forme de demi-cercle par une tête coulissante (111) qui présente une surface de coulissement en forme d'arc de cercle, **en ce que** l'étrier de maintien (15) présente une fente (17) qui s'étend dans la direction périphérique au moins sur la plage angulaire de l'échelle angulaire (21) et à travers laquelle une vis de serrage (19) qui s'appuie par l'intermédiaire d'une pièce de serrage (18) sur le côté inférieur de l'étrier de maintien (15) peut être vissée dans la tête coulissante (111).

4. Outil manuel motorisé selon la revendication 3, **caractérisé en ce que** des rainures d'encliquetage (20) sont disposées dans l'étrier de maintien (15) le long de la fente (17) en association avec les valeurs de l'échelle angulaire (21) et **en ce qu'**un bec d'encliquetage est disposé sur la tête coulissante (111) en association avec le repère (23) et coopère avec les rainures d'encliquetage (20).

5. Outil manuel motorisé selon l'une des revendications 1 à 4, **caractérisé en ce qu'**un écran (22) qui recouvre au moins partiellement une section transversale délimitée par l'étrier de maintien (15) et la plaque de pied (13) est disposé sur l'étrier de maintien (15) sur le côté frontal arrière de l'étrier de maintien (15) non tourné vers la découpe (14) ménagée dans la plaque de pied (13) et **en ce que** l'échelle angulaire (21) est disposée sur l'écran (22).

6. Outil manuel motorisé selon la revendication 5, **caractérisé en ce que** l'écran (22) est incliné dans la direction de coupe sous un angle aigu.

7. Outil manuel motorisé selon l'une des revendications 1 à 6, **caractérisé en ce que** l'étrier de maintien (15) présente dans la direction de coupe une longueur axiale qui est de l'ordre d'un tiers de la longueur axiale de la plaque de pied (13).

8. Outil manuel motorisé selon l'une des revendications 1 à 7, **caractérisé en ce que** la plaque de pied (13) est configurée comme pièce moulée par injection, par exemple pièce moulée en aluminium sous pression, sur laquelle un étrier de maintien (15) est formé d'un seul tenant.
